# EUROPEAN PATENT APPLICATION

(11) **EP 2 653 773 A1**
(43) Date of publication of application: **23.10.2013**
(21) Application number: 12002712.3
(22) Date of filing: 19.04.2012
(51) Int. Cl.: F17C 13/00, B63B 35/44, F24J 2/00, F25B 27/00, F17B 1/00

(54) **Industrial unit for production of hydrogen and optimization of operation of electric power plants**

(71) Applicant: Vedrex Ltd., 1582 Sofia (BG)
(72) Inventor: Tinchev, Vasil Kirilov, 1836 Sofia (BG); Milanov, Emil Stefanov, 1233 Sofia (BG)

(57) **Abstract**

The invention relates to an industrial unit for production of hydrogen for commercial resale or re-use including the generation of electricity. The unit is able to consume the entire output from already existing electric power plants (1), and more specifically the power, which is not consumed by the grid during off-peak periods of the day. This is managed by a device (3) for control and commutation of the electrodes within the electrolyser (4). Such systems are useful for nuclear and other power plants that produce electricity continuously. The primary concern with this solution is the safe storage of the significant volume of hydrogen that can be produced. We believe our system solves this problem effectively. The hydrogen (7) produced through electrolysis is stored in a cylindrical tank (11) which bottom part accommodates a movable floating plunger with a sealing ring (12). The plunger stroke (12) is stopped in its lower part by a limit ring (13), while the industrial tank (11) is arranged in a deep pit (14) flooded with water (15). Below the plunger (11), there is a layer of floating lubrication oil (16). The hydrogen (7) produced by the unit is fed to a bottling and/or liquefaction warehouse (17) and to a thermal-electric power plant cogenerating electricity (18). Two modifications of the system relate to self-dependent plants for production of hydrogen located on floating platforms (one of them uses a solar power plant, and the other uses water turbines submerged in the region of an ocean drift).

## Description

### Field of the Invention

The invention relates to an industrial unit for production of hydrogen which is also applicable for production of electricity as an alternative of the Pumped Storage Hydroelectric Power Plants (PSHPP). The unit is designed for utilization of the whole design power of existing power plants, and in particular, of this power which cannot be consumed by the electric supply grid during definite periods of the day with reduced consumption. Such systems are particularly useful for nuclear and other power plants in which the electricity production is continuous. Two special embodiments of the invention in the form of offshore (ocean and sea) floating platforms disclose entirely self-depending plants for production of huge industrial quantities of hydrogen.

### Background of the Invention

In all or almost all industrial atomic or, more specifically, nuclear power plants (NPP) in the world, systems for utilization of the design power during definite periods of the day with reduced consumption from the electric distribution system are used. For this, systems of the PSHPP type (Pumped storage hydroelectric power plants) are usually used most often. In this case, power which is not consumed is used for rising water to a dam specifically built and for returning back the electricity generated by water turbines during the periods of peak loads of the grid. The disadvantage of this technical solution is related to the necessity of building huge artificial hydraulic facilities, due to the relatively small specific energy in a unit of water which is stored in the form of possible potential energy (at reasonable height of the hydraulic facility - up to several hundred meters). Another disadvantage is that a mountain area has to be available in the region which is required for the creation of a natural relief difference between the heights of the facilities, as well as a water source has to be available with a sufficiently large flow rate. It is obvious that such conditions are rarely existent in the area of such big and non-optimized sources of electricity as the nuclear power plants. Due to this, as a rule, the nuclear power plant and the related PSHPP are spatially separated. Then, the electricity generated by the nuclear power plant arrives with losses due to the power transmission which is also an essential disadvantage. Another disadvantage of this technical solution is that the excess power is not used for production of fuels - a matter which is extremely topical under the conditions of exhausting the reserves of natural fuels. In contrast to PSHPP, one industrial hydrogen generator which uses the whole non-consumed power of the nuclear reactors in fact gives the nuclear power plants one additional source of income which may be even greater than the income obtained from the sales of electricity. From an economic point of view, the value of the increased consumption of nuclear fuel in case of complete use of the design power of the nuclear reactors is the least economic expenditure during the operation of a NPP. A much greater cost is connected with the initial investment for construction of a NPP, as well as the costs for labour and maintenance of the safety systems.

The hydroelectric power plants (HPP) which are constructed in the vicinity of water sources with a flow rate which is relatively high and constant by seasons likewise cannot be used efficiently and the usable energy produced by them, on the average in the course of time, corresponds to the half or less of their maximum design power. The economic losses due to this are huge. This is due to the fact that the passage of a greater water flow through the plant when it is under constant load in the course of time, from an economic point of view, does not incur costs, except for somewhat higher amortization.

In fact, a system for optimizing the operation of a nuclear power plant is revealed in patent /1/ of Toshiba corp., whereby during the night hours of lower consumption, sea water is pumped out and then cooled down to ice in a special heat-exchanger. During the hours of peak electricity consumption, the agent used for cooling down the reactor passes through the heat-exchanger with the ice and thus increases the reactor useful power and efficiency factor. The advantage of this technical solution is that the system for optimization is located in a spatial vicinity of the reactor, but the great disadvantage is the low efficiency of such a technical solution for utilization of the reactor power which has not been fed to the electric distribution grid. This solution may improve and increase the reactor power in peak moments with up to 10 percent. The percent of utilization of the unused reactor power for a useful work during the periods of peak electricity consumption is also of the same order.

Patents /2/ and /3/ relate to the production of hydrogen within the nuclear reactor cooling systems. The limited quantity of coolant in these systems does not allow for complete utilization of the reactor free design power, due to which hydrogen cannot be produced in quantities corresponding to the greater percent of the reactor free design capacities. Furthermore, hydrogen and oxygen obtained are mixed under high temperatures, which inevitably leads to questioning the safety of such systems. The same is valid for the newer Japanese patents /4/ of Hitachi LTD and /5/ of FBARA as of 2006 and 2005, whereby otherwise high-efficiency electrolysis is executed above superheated water steam. All these patents require construction of new reactors or modification and transformation of the working area and the safety systems of existing reactors which, in most cases, is very expensive, complex or completely impossible for the old reactors.

Currently, the process of production of hydrogen based on a chemical reaction consisting in passing water steam above heated coal is most common. The waste product of this production is carbon oxide which is highly toxic and harmful for the environment. Based on a number of additional chemical reactions, it is said, that harmless waste is generated. However, costs for production and transportation of coal for such production, as well as costs for decontamination and disposal of the harmful waste, are again required here.

A method of production of hydrogen fuel using electrolysis is known. This is an entirely environmentally-friendly method of production of hydrogen, especially if alkaline electrolysis is applied. A disadvantage of all currently existing technical solutions for production of hydrogen is the lack of efficient and safe methods and devices for storage of huge industrial quantities of hydrogen fuel.

The studied references disclose electric power plants and hydrogen production systems which are ocean- and sea-based. For example, the patents of the Swiss inventor Thomas Hinderling reveal different variants of floating platforms processing the incident solar energy into electricity. One such platform is considered in one of his patents /6/ - a "solar platform". The disadvantage is that the issue of gathering solar energy from an offshore platform is solved only in general and using general terms (platform bearing structure which is located above floating elements, means for gathering solar energy, means for transformation of this energy, means for accumulation of the product from this energy). The emphasis is put on the optimum orientation as regards the sun of the system elements arranged in a water basin, which in this case is relatively easy by means of rotation of the platform around its axis. But this does not allow the platform to be self-dependent. A newer patent /7/ specifies a solar platform with photovoltaic panels and concentrators of Fresnel lens. Here again, the attention is focused on the structure orientation as regards the sun for optimum production of electricity. As far as the structure is not specialized for production of hydrogen, it is assumed in this patent that the artificial island is intended for production of electricity in coastal areas, and the electricity generated is transmitted to the mainland using a cable. Another patent /8/ reveals solar plants which are mounted on the platform and produce water steam to be used for production of electricity in thermal-electric power plants (TPP) on the mainland. Here again, we have an artificial island with a solid coastal base. A disadvantage of all these patents is that they do not solve the problem of the solar power industry in the open sea with entirely sea or ocean arrangement. This is due to the fact that when the platform is far from the mainland, a method for storing the electricity produced is not applied. Of course, it is most convenient to use this electricity for production of hydrogen, but then the problem of safe storage of this hydrogen has to be solved. The inventions of Thomas Hinderling do not even mention these problems and this is their biggest disadvantage.

The patent "Submerged ocean current electrical generator and method for hydrogen production" /9/ reveals a system of water turbines submerged in an ocean drift, such as the Gulf Stream, which turbines are anchored to the ocean floor. The electricity produced is transmitted along cables to an underwater electrolyzer with a separator for hydrogen and oxygen. Using pipelines, the hydrogen and oxygen produced are injected in storage tanks floating on the surface. A disadvantage of this patent is the above-water arrangement of the hydrogen storage tank which exposes it to sea storms, malicious human actions, risks of gas leaks and explosion of the stored hydrogen in case of a reaction with the oxygen from the air. In addition, a special platform with a crew is not envisaged, and the electrolyzer, the pumps and the electric power control systems are located under water which makes their maintenance inconvenient.

### Summary of the Invention

The problem solved by the present invention relates to the construction of a plant for production and safe storage of huge industrial quantities of hydrogen. The hydrogen production unit of the invention can utilize the whole design capacity of the existing electric power plants, in particular, the NPPs and HPSs which, due to the present invention, may become not only a source of electricity, but also a basis for a large-volume production of an ecological fuel - the hydrogen. The hydrogen stored can be transported to the end users where it can be used as a fuel for vehicles or a feedstock for the chemical industry. A part of it could be used for optimization of the power plant operation, and for this, it can be fed to a cogenerating power plant during the periods of peak electricity consumption. These two alternative possibilities for utilization of the hydrogen produced and safely stored in this way allow for significant increase of the hydrogen fuel share in the transport.

Two embodiments of the invention in the form of ocean or sea floating platforms do not include a cogenerating power plant which allows for their use as self-dependent plants for production of huge industrial quantities of hydrogen.

The problem solved by the first of these embodiments of the invention relates to allowing for the use of the incident solar energy above the ocean and sea space. In the geographical latitudes between the tropics and the equator, depending on the season, the solar energy per unit of area of the ocean or sea surface is in largest amounts. The energy in these geographical latitudes reaching the surface is about 1 kW/m² in sunny days. Then, the solar energy per area of 1 km² is with a power of 1GW. Of course, since currently the photovoltaic panels operate with about 20% of their efficiency, the capacity of one solar power plant arranged on a floating ocean platform with an area of 1 km² is of the order of 200 MW which is satisfactory enough for the power industry. For now, this huge solar energy incident above the sea and ocean space is not used for industrial purposes, although it is tempting to develop solar power industry in the seas and the oceans, since this does not affect the mainland parts which may be used for agriculture. Another embodiment of the invention may give rise to the development of a solar power industry based on the ocean and sea space, with an end product - generated hydrogen.

The problem solved by the second of these embodiments of the invention relates to giving a possibility for use of the energy of ocean and sea drifts for production of hydrogen which yield may be with much lower operational costs and without significant restrictions for expansion of this production in the near future. Grounds for this statement gives the fact that from a geophysical point of view, the ocean drifts are a powerful and concentrated energy stream originating from the solar energy reaching the Earth. The ocean and sea drifts are with a greater power in a unit of volume in comparison with the atmospheric drifts. For example, the ocean drift Gulf Stream has a cross section of about 80 km and moves with almost 2 m/s, i.e. if we take the surface layer of 100 m of water, 80 000x100x2x3600=57.6 billion of m3 of water pass for 1 h through this cross section, which means that the kinetic power of this stream is 32 GW. For comparison, one average nuclear power plant is with a capacity of 2 GW. For now, this energy practically is not used. The offered embodiment of the invention might change the situation since it allows for utilization of a part of the energy of the ocean and sea drifts.

The industrial unit for production of hydrogen, the subject-matter of the present invention, is connected to the output electric power of a power plant. The whole unit is located in the vicinity of the power plant and the electric power is fed to a DC converter having parameters which are optimum for water electrolysis. The converter output current is fed to a unit for control and switching the number of electrodes included into the electrolysis electric circuit of the industrial electrolyzer. The power consumed by this electric circuit, through the control unit, in every moment, is maintained equal to the difference between the power plant power and the momentary power consumed by the consumers within the power distribution grid. The electrolyte in the electrolyzer, on its part, is preheated by a heat-exchanger within the cooling systems of nuclear and thermal-electric power plants for execution of more efficient electrolysis. The produced oxygen is released into the atmosphere or is fed to liquefaction and bottling plants. The produced hydrogen, through pumps and a back valve, is injected into a cylindrical tank having in its bottom part a moving floating plunger with a sealing ring; the movement of this plunger is stopped in one end position by a limit ring mounted in the structure. The industrial hydrogen tank is located in a deep underground pit flooded with water, and below the plunger, there is a layer of lubrication oil floating in the water. The back valve is arranged under water, in a section of the connection pipeline near the cylindrical tank. A part of the produced hydrogen is fed to a bottling and/or liquefaction storage, as well as for storage in the form of metal hydrides using a system of valves, while at least one of these valves is located under water and within a section of the connection pipeline near the cylindrical tank. Another part enters a power plant cogenerating electricity. The hydrogen fed to the cogenerating power plant undergoes combustion in a special reactor or a hydrogen turbine used for production of additional electricity during the periods of peak consumption. The industrial unit for production of hydrogen is particularly efficient for nuclear, thermal-nuclear or another power plant with a continuous process of electricity production, and the cogenerating TPP can be with an equal or greater design capacity than the primary power plant.

For utilization of a part of the solar energy reaching the ocean or sea surface, it is proposed that the industrial hydrogen production unit uses the electricity of a special solar power plant which is arranged above a floating platform. In this case, the electrolyzer and the control and switching unit are also a part of the floating platform being at a depth of hundreds of meters below the water surface and the cylindrical tank from the invention for storage of hydrogen is lowered using robust steel ropes. The tank connects to the floating platform equipment by means of two pipelines - one along which the hydrogen from the electrolyzer enters, and another along which the stored hydrogen is fed to specialized tankers for further transportation to the end users. The pipelines and the steel ropes are designed so as to provide for robust free suspension of the hydrogen storage tank. This allows for movement of the solar platform as a whole in the oceans and the seas, far from the mainland. Thus, the floating platform may take a geographical position which is most favourable as regards the incident solar energy and the momentary cloudiness.

For utilization of a part of the energy of the ocean and sea drifts, the industrial unit for production of hydrogen of the invention uses the electricity generated by a system of underwater turbines tightly anchored to the floor which turbines are located within the area of the drift itself. In this case, the electrolyzer, the DC converter and the control and switching unit which are a part of the production unit are mounted on a floating platform and connected to the underground turbines and the hydrogen storage tank submersed under water at the same time. As in the case above, the hydrogen produced is intended for loading on tankers which transport compressed gas.

When a floating platform is used for the purpose of the hydrogen power industry according to the invention, the platform may be designed of groups of plastic floats comprised by meshes. The plastic floats are made of recycled plastic, and each float encompasses an internal air volume and contains an external thin layer of a special polymer resistant to the sea water impact. A solid metal frame is arranged along the platform perimeter which upper end is raised so as to keep the island integrity and to protect it against stormy sea.

A main advantage of the invention is the possibility for provision of a mass and cheap production of hydrogen which is stored for further use safely in huge industrial volumes. The system for safe storage of hydrogen under pressure head (efficiently always exceeding 100 meters and if possible, at 200-300 m below the water surface as an optimum) of the invention, in practice, does not allow the stored hydrogen to interact with the atmospheric oxygen under any circumstances. Thus, the water hydrostatic pressure can be used for compression of the stored hydrogen and its feeding under constant high pressure to the bottling systems or for combustion as a fuel (at 300 m of pressure head in the range up to 30 atm.), since the tank is not ordinary, but with a moving bottom-float. Relatively small changes in the pressure expressed in percent (depending on the volume stored) may be regulated in the process of fuel combustion in a cogenerating TPP (if used for production of electricity) by means of hydraulic throttles which can always feed fuel with a constant and adjustable flow rate. Besides, automatic permanent maintenance of high pressure in the huge stored volume of gas and the long pipelines passing through the water does not allow the atmospheric oxygen to enter the hydrogen production plants (as well as the systems for its bottling or combustion) in case of any accidents and explosions on the surface, i.e. a process of combustion cannot be transmitted to the stored industrial volume of hydrogen. The only possibility for this is when flaring of the gas going out of the damaged pipeline occurs. This flaring can be stopped using an appropriate emergency valve mounted in the pipeline section which is located in the vicinity of the stored hydrogen. In case of a fire and an accident in the systems for hydrogen injection into the tank or at the electrolyzer, flaring is automatically stopped also by the back valve. Safety of the huge volume of stored hydrogen is also guaranteed by the fact that the internal hydrogen pressure within the tank is mutually compensated with the external hydrostatic pressure of the water above it. At that, the pressures are relatively low, in comparison with the pressure in one compressed gas tank - 20-30 atm. against 150-200 atm. in the standard compressed gas cylinders. The relatively low and compensated pressures create low stresses within the tank structure which contributes to its safety.

An important advantage of the invention is the possibility for increasing to a great extent, to doubling, the useful consumption of electricity from an already existing nuclear power plant (NPP) which, in general, is with continuous electricity production. This is at the cost of optimizing its operation using an industrial hydrogen production unit. An additional advantage relates to the possibility of feeding the electric grid by an NPP equipped with such a unit with power which is twice as big as the design power, depending on the regional demands of the electricity consumers during the periods of peak consumption.

Another advantage of the invention is that it offers a waste-free ecological technology for production of hydrogen. The only "waste" of the technology of the invention is the oxygen with which the atmosphere is enriched during the periods of production of hydrogen. The combustion of this fuel leads to the production of such an amount of steam that was used in the form of water for its production.

Another advantage of the invention, which a reason for its immediate implementation, is that it also allows for flexible adjustment of the ratio between the electricity and fuel produced without changing the facilities constructed according to the patent. In the future, the nuclear power plants may use the unused design electric power exclusively (up to 100%) for production of hydrogen. Today, this ratio might be different - up to 100% for generating an additional electric power during the periods of peak consumption. It is also possible that in the future, the HPPs operate only for production of hydrogen fuel and not as power plants - according to the industry needs.

Another advantage of the invention relates to the fact that it is applicable to and increases significantly the percent of yield of useful energy and the design power during the periods of peak consumption of each future development of a power plant - such as, e.g., the forthcoming thermal-nuclear power plants (TNPP), without changing the design structure at all. The only power plants, for which the invention is not feasible, are the thermal-electric power plants. But this is still another advantage of the invention because it creates prerequisites for closing the classical TPPs which will lead to significant reduction of the greenhouse gases released into the atmosphere.

Another advantage of the invention is that for construction of the relevant industrial plant, available natural resources with relatively not large volume are required, such as water sources with a relatively low flow rate - natural or artificial - which are brought to the hydrogen production unit using a channel or a pipeline. The plant takes a comparatively small area of the natural environment and is easy for construction on any existing natural relief or terrain.

Another advantage of the invention is that it itself is safe and secure during operation and does not require transformation and modification of the existing safety and security systems of the power plants already existent.

As regards the floating solar platforms (in contrast to the patents quoted /6/, /7/ and /8/ of Thomas Hinderling), the present invention solves in particular the problem of hydrogen production using a solar energy which is probably the most valuable industrial product of a sea-based solar power industry. An advantage of the present invention is that the artificial floating platforms (islands) are definitely located far from the mainland and are not a part of an industrial costal area. The potential of such a power industry in the open sea is much greater - the least useful areas are significantly more. The advantage relates to the use of a special depot for safe storage of large industrial quantities of hydrogen under water before their transportation to the end users by means of special-purpose tankers. An advantage is also the structure of the artificial islands of the invention which has a low prime cost, a sufficient mechanical strength and corrosion-resistance. According to the invention, recycled plastic can be used as the main material for such a structure. Therefore, an additional advantage is that industrial contamination already available can be reduced during the production using such solar platforms.

Another advantage of the invention in the cases where a floating platform anchored within the area of an ocean or sea drift is used, is that there is a possibility for continuous production of hydrogen by means of underwater turbines lowered in the drift. This is due to the fact that water drifts transfer more energy per unit of area than the air drifts and are more constant than them. The capacities of the water turbines supplying the industrial unit for production of hydrogen may be relatively high - dozens or hundreds of megawatts. At that, the production costs and the costs for construction and maintenance of such a platform are comparatively low. This is due to the fact that the elements of the unit are delivered to the facility operating area, whereby, in contrast to the case with the mainland, hydro-technical construction works, such as construction of dams, pits, etc., are not required. The floating platform size can be small and the presence of large amount of service personnel on it is not necessary. A main advantage of the present invention, in comparison with the earlier solutions for utilization of the energy of the ocean and sea drifts, is that the hydrogen produced can be safely and reliably stored in the large underwater tanks of the invention before being transported by means of special-purpose tankers.

### Brief Description of the Drawings

Figure 1 is a functional block diagram of an industrial unit for production of hydrogen and optimization of operation of power plants.
Figure 2 is a drawing of one embodiment of the invention, according to claim 3.
Figure 3 is a drawing of one embodiment of the invention, according to claim 4.
Figure 4 and Figure 5 are views of a 3D graphics of one possible exemplary embodiment of the inventions, according to claims 1 and 2.

### Examples of the Embodiments

The industrial unit for production of hydrogen (fig.1) relates to a power plant. The whole unit is located in the vicinity of a power plant 1, which power is fed with small losses due to power transmission to a DC converter 2 having parameters which are optimum for water electrolysis. The output current of the converter 2 is fed to a unit 3 which is used for control and switching the electrodes contained into the electric circuit for electrolysis of an industrial electrolyzer 4. The power consumed from this electric circuit via the control unit 3 is maintained equal in every moment of time to the difference between the power fed by the power plant and the momentary power consumed by the consumers in the electric distribution grid.

In return, the electrolyte in the electrolyzer 4 is preheated by a heat-exchanger 5 which is part of the cooling systems of nuclear and other power plants to temperatures allowing for more efficient electrolysis. In cases where an industrial plant for alkaline electrolysis is used, preheating is carried-out to temperatures lower than the electrolyte boiling point. If high-efficiency electrolysis of water steam as per the PEM (proton exchange membrane) technology is used, preheating is intended for generation of water steam with a temperature, for e.g., of 130-140 degrees Celsius.

The oxygen produced is released into the atmosphere or is fed to plants for liquefaction and bottling 21.

The hydrogen produced 7 is fed to an incoming pipeline 8 along which it is injected into a cylindrical tank 11 using pumps 9 and through a back valve 10. The lower part of this tank 11 accommodates a movable floating plunger with a sealing ring 12 which stroke is stopped by a limit ring 13, and the whole system for storage of the produced hydrogen is arranged into a deep underground pit 14 flooded with water 15. At that, there is a layer of lubrication oil 16 floating in the water below the plunger 12. For greater safety, the back valve 10 is located under water, and the hydrogen stored in the tank 11 is fed to a warehouse 17 for bottling, liquefaction and metal hydration and/or to a power plant cogenerating electricity 18 by means of an outgoing pipeline 19 which is equipped with a valve system 20, whereby at least one of the valves is located under water 15 in the vicinity of the cylindrical tank 11.

The movable floating plunger 12 for industrial plants is with a structure of a rigid material. When smaller tanks are used for reducing the costs of the structure, the plunger 12 may be made of a flexible material, may have a bell shape resembling the tank outlines and may be rigidly fixed in the middle of the structure. The stroke of such a flexible plunger 12 is restricted within the tank. The advantage of the said rigid structure is the better wear-resistance, reliability and the possibility of storing hydrogen 7 in the tank 11 having a pressure which is higher than that of the surrounding water 15. Thus, the tank 11 may be used as an ordinary tank with pressures within the range of 100 up to 200 atm, but for greater safety, it may be arranged under a water layer with a depth of about 100 meters. In addition, when the stored hydrogen 7 begins to get exhausted, the said tank 11 switches automatically to a compensated pressure duty as regards the pressure of the surrounding water 15, while the stored gas pressure will be never less than about 10 atm. This pressure, together with the relatively long pipes through which the underwater tank 11 is connected to the remaining parts of the system, prevents penetration of oxygen from the atmosphere to the stored volume of hydrogen 7 in all emergency cases. Said mode of storing the hydrogen 7 at a pressure higher than that of the surrounding water 15 is preferably applied for tanks 11 using the electricity of said power plants 1 arranged on the mainland, so that the excavation works for construction of the underground pit 14 flooded with water can be reduced (an excavation of 100-150 meters is a standard, but its depth is not necessarily 1 km). A compensated pressure duty is not advisable to be used when it is possible to arrange the tank 11 in deep pits already existent - for e.g., pits in abandoned mines. Then, the electrolyzer 4 can be connected to the remote power plant 1, in practice, without losses due to the power transmission, using the method proposed by Prof. Carlo Rubbia in 2011. At that, the necessary liquid hydrogen is provided by the tank 11 through the depot 17 for liquefaction, and the power transmission line according to the Carlo Rubbia method becomes also a line for transportation of the hydrogen produced.

In embodiments of the invention with a floating platform 22, the tank 11 may operate exclusively in a compensated pressure duty since its lowering into depths of 1 km below the surface of the ocean water 15 will not create difficulties. Then, the pressure of the stored hydrogen 7 of about 100 atm can be entirely balanced with that of the water 15 around the tank 11 which allows for achieving a maximum degree of safety during storage of said hydrogen 7.

In an exemplary embodiment of the invention, hydrogen 7 fed to the cogenerating power plant 18 undergoes combustion in a special reactor or a hydrogen turbine, if the cogenerating power plant 18 is constructed as a TPP (thermal-electric power plant). In another exemplary embodiment, the cogeneration power plant 18 may be designed to use industrial fuel cells where the fed hydrogen 7 is oxidized with the oxygen from the atmosphere. The cogenerating power plant 18 is used for generation of additional electricity which is fed to the power distribution grid during the hours of peak consumption.

Optimization according to the invention consists in that the production of hydrogen is carried-out in a separate electrolyzer 4 where the hydrostatic pressure is relatively low in the process of electrolysis (lower than two atm.). Under such pressures, the degree of dissolution of oxygen and hydrogen into the electrolyte is small and in practice, this harmful process is avoided during production. Also, a relatively small volume of electrolytic solution is used, exactly as is required for doubling the whole design power of the hydrogen generator, for a given geometry of the electrodes. On its part, the volume of hydrogen 7 stored under high pressure has no direct contact with the large amount of water 15 which creates this pressure, except in sections having an extremely small area and through the oil layer 16. The hydrogen 7 stored in this way, in practice, does not leak and does not dissolve in the water 15 used for creation of a hydrostatic pressure. Coatings are applied on the inside of the cylindrical tank 11 used for storage of hydrogen 7 and the float surface 12 having a contact with the hydrogen 7; these coatings prevent the interaction between the hydrogen and the metal and the formation of hydrides.

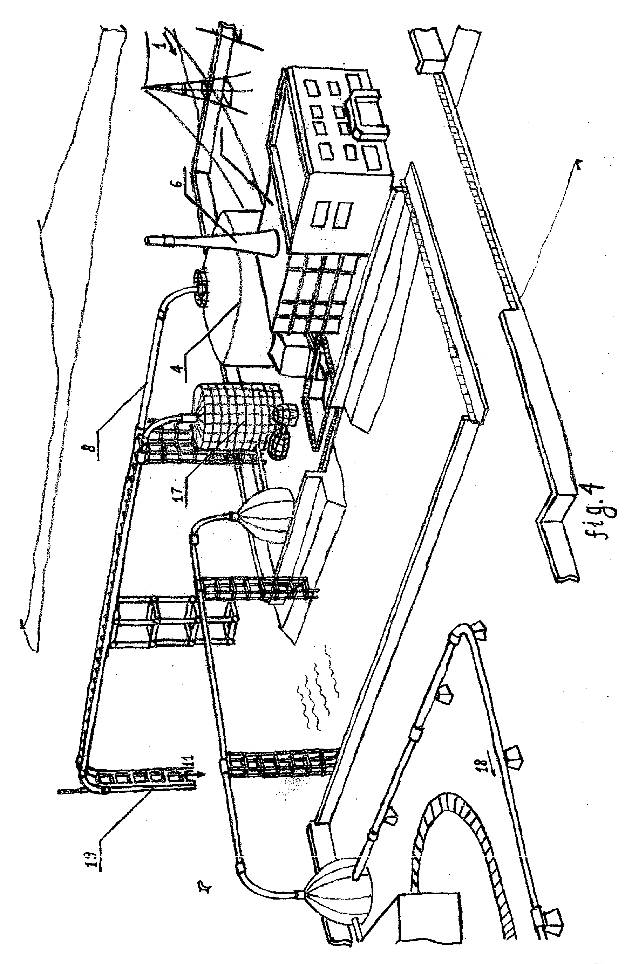

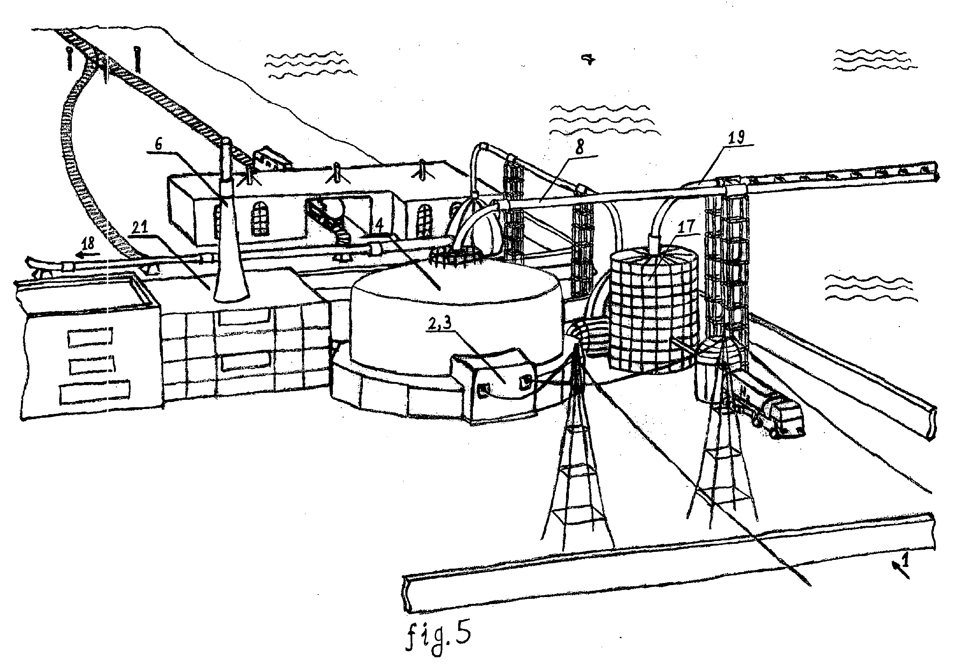

The industrial unit for production of hydrogen is particularly efficient for nuclear, thermal-nuclear and other such power plants with a continuous process of electricity production, and the cogenerating power plant 18 can have an equal or greater design power than that of the primary power plant. Fig. 4 and fig. 5 illustrate one possible exemplary embodiment of the invention.

When the industrial unit for production of hydrogen uses the solar energy incident above the oceans and the seas, it has to be arranged on a floating platform which is big enough, as is illustrated schematically in fig. 2. This is due to the fact that in this case, the solar power plant 1 necessary for the operation of the industrial unit for production of hydrogen yields about 200 MW of useful electric power at an area of the solar panels of 1 km². It is obvious that the necessary floating platform is preferably with the dimensions of an artificial floating island. One particular design of the floating island may be realized by means of multiple plastic cylinders filled with air (each one of them having a length between 10 and 20 meters) which are linked in groups using a common encompassing mesh. A solid metal frame is located along the perimeter of the platform 22 constructed in this way; the frame's upper edge is raised in order to maintain the island integrity and to protect it against stormy sea. The plastic cylinders can be made of recycled plastic in a special factory, including in the shape of a ship, gathering and processing the sea plastic garbage, large quantities of which, as known, are accumulated in separate areas of the World Ocean - e.g., the Sargasso Sea or the Great Pacific Garbage Patch. The structure described above of plastic cylinders linked with a common mesh may be robust and reliable enough, and the use of recycled plastic for construction of artificial floating islands is profitable from an economic point of view and useful from an environmental point of view. At that, a structure with a mesh encompassing floating cylinders is flexible and does not create significant limit stresses within the floating platform 22 with so large linear dimensions (or the order of 1 km). The electrolyzer 4 and the control and switching unit 3 are also a part of the floating island, and the cylindrical tank of the invention 11 for storage of hydrogen is lowered to a depth of hundreds of meters below the water surface, below the island geometrical centre, by means of robust steel ropes and winches. The tank 11 is connected to the equipment of the floating platform 22 by means of two pipelines - one 8 along which the hydrogen 7 produced by the electrolyzer 4 is pumped to the tank 11, and one 19 along which the stored hydrogen 7 is fed to special-purpose tankers 23 for further transportation to the end users. At that, it is reasonable to separate spatially the port for the mooring tankers 23 from this part of the floating island which is intended for residential buildings. The pipelines 8, 19 and the steel ropes are designed so as to provide for one robust free suspension of the tank 11 for storage of hydrogen 7 under water. In one of the design variants, the hydrogen pipelines 8 and 19 may be composite and may include 10-20 sections of steel pipes with a length of about 50 meters which are connected to each other by means of special movable couplings (e.g., of the type of a pivot pin with an appropriate sealing). Electric engines mounted on the floating platform 22 may ensure its travel in the open ocean. Thus, the floating island can take a geographical position which is most favourable as regards the incident solar energy and momentary cloudiness. A part of the electricity produced by the power plant 1 arranged on the floating platform 22 is used for the needs of the crew - mostly for making fresh water from the sea water and including for developing an own agriculture in these areas of the floating platform which are not occupied by solar panels (e.g., at the island periphery). At that, the solar panels of the said power plant 1 may be standard or similar to those which were recently proposed by the Solarphasec company, having a space saving conical shape and, in contrast to the standard panels, not using mechanical systems for orientation in relation to the Sun (the so-called solar trackers).

In a particular example of an industrial unit for production of hydrogen (illustrated schematically in fig.3) which utilizes the energy of ocean or sea drifts, the DC converter 2 and the control and switching unit 3 may be mounted on a floating platform 22 which is anchored in a region of an ocean or sea drift. A system of underwater turbines is lowered into the drift and is tightly anchored to the floor, and this represents a specialized power plant 1 which supplies the hydrogen production plant. The water turbines may freely float within the drift and may have mounted boards which orient them along the drift direction. At that, the cylindrical tank 11 for storage of the hydrogen 7 produced by the industrial unit, as well as the water turbines, are lowered to a depth of hundreds of meters under water 15 and are anchored tightly to the floor, while the outgoing pipeline 19 does not lead to a bottling warehouse 17 on the surface, but is used for loading tankers 23 transporting hydrogen. The operation of such a plant does not require a big screw, and the floating platform 22 in this case may have relatively small dimensions - for example, with a diameter of 100 m. All necessary preliminary works for commissioning the industrial unit are executed by a special-purpose submersible underwater robot controlled from the surface which executes the operations on tight anchoring of the facilities to the ocean floor.

The invention may be applied also in a special case when the electric power plant 2 supplying the electrolyzer 4 is a system of fuel cells using for their operation the hydrogen sulphide dissolved in the waters of the Black Sea. Currently, there are such systems proposed (by Prof. Venko Beshkov), but they lack a reliable method for storage of industrial volumes of hydrogen produced using electrolysis. The industrial tank for storage of hydrogen 11 of the present invention gives one possible solution to this problem which may allow for development of a truly environmentally-friendly industry for production of hydrogen from the Black Sea aquatory.

### Use of the Invention

When designing industrial units for production of hydrogen and optimization of the operation of power plants according to the invention, one will design such hydrogen storage tanks 11 that have a maximum capacity for a one-week output of hydrogen from the said power plant at the use of its full capacity for this production. This is applicable only for plants mounted on the mainland. As regards the facilities mounted on floating platforms, this period will be about one month. Thus, such a reserve of hydrogen will be provided that will allow for a regular schedule for transportation to the users.

With the implementation of hydrogen engines in the transport and hydrogen jet engines, due to the present invention, the hydrogen fuel can be produced in a cheap and environmentally-friendly way in huge industrial volumes and may become the primary fuel for the aviation, as well as for the space systems for putting loads into orbit (when the oxygen produced undergoes liquefaction). Also, it may find wide application in the mass ground transport for loading fuel cells, as a fuel for modified internal combustion engines or as an enrichment component for the standard fuel.

### References

1. JP2000338278
2. US2002071515
3. US3535082
4. JP2006307290
5. JP2005232523
6. WO2008015064
7. US2010307566
8. EP2315918
9. US4850190

## Claims

1. An industrial unit for production of hydrogen, connected to the output electric power of an electric power plant, **characterized in that** the whole unit is located in the vicinity of a power plant (1) and its electric power is fed to a DC converter (2) having parameters which are optimum for water electrolysis, and which output current is fed to a device (3) for control and switching of the electrodes contained in the electric circuit for electrolysis of an electrolyzer (4), whereby the power consumed by this circuit through said control device (3) is maintained equal in every moment of time to the difference between the power fed by the power plant and the momentary power consumed by the consumers in the power distribution grid; the electrolyte in said electrolyzer (4), on its part, is preheated for conducting a more efficient electrolysis to temperatures which are lower that its boiling point by a heat-exchanger (5) being a part of the cooling systems in nuclear or other power plants, and the oxygen produced (6) is released into the atmosphere, or is fed to a liquefaction and/or bottling plant (21), and said hydrogen produced (7) is fed to an incoming pipeline (8) along which, using pumps (9) and through a back valve (10), it is injected into a cylindrical tank (11) which bottom part accommodates a movable floating plunger with a sealing ring (12) which stroke is stopped by a limit ring (13), while said industrial hydrogen tank (11) is arranged in a deep underground pit (14) flooded with water (15), and a layer of lubrication oil floating in the water (16) is found below said plunger (12), whereby the back valve (10) is located under water (15), and the hydrogen stored in said cylindrical tank (11) is fed to a depot (17) for bottling, liquefaction and metal hydration and/or to an electric power plant cogenerating electricity (18) by means of an outgoing pipeline (19) on which a system of valves (20) is mounted, while at least one of the valves is located under water (15) in the vicinity of said cylindrical tank (11).

2. An industrial unit for production of hydrogen according to claim 1, **characterized in that** the said electric power plant supplying power (1) is nuclear, thermal-nuclear or similar, with a continuous process of electricity production, as well as any other power plant using renewable energy sources.

3. An industrial unit for production of hydrogen according to claim 1, **characterized in that** the said electric power plant supplying power (1) is solar and is located on a self-dependent floating platform (22), while said cylindrical tank (11) is freely suspended below the platform (22), and the hydrogen (7) stored by it is intended for loading on tankers (23) transporting compressed gas.

4. An industrial unit for production of hydrogen according to claim 1, **characterized in that** a part of its components is located on a floating platform (22) anchored in the region of an ocean or sea drift, and said power plant (1) supplying power consists of a system of underwater turbines submerged in the drift itself, whereby the turbines are tightly anchored to the floor, whereby the hydrogen (7) stored in said cylindrical underwater tank (11) is intended for loading on tankers (23) transporting compressed gas.

5. A floating platform (22) being an artificial island used in accordance with claims 3 and 4 for the purposes of the power industry and for any other purposes, **characterized in that** said platform (22) is made of plastic floats filled with air which are made of recycled plastic and are tightly encompassed by meshes, while each one of them comprises an external thin layer of a special protective polymer designed for protection against the sea water impact, and along the perimeter of said platform (22), there is a solid metal frame which upper edge is raised so as to maintain the island integrity and to protect it against stormy sea.

## Amended claims

### Amended claims in accordance with Rule 137(2) EPC.

**1.** An industrial unit for production of hydrogen and optimization of operation of electric power plants connected to the output electric power of an electric power plant, **characterized in that** the whole unit is located in the vicinity of a power plant (1) and its electric power is fed to a DC converter (2) having parameters which are optimum for water electrolysis, and which output current is fed to a unit (3) for control and switching of the electrodes contained in the electric circuit for electrolysis of an electrolyzer (4), whereby the power consumed by this circuit through said control unit (3) is maintained equal in every moment of time to the difference between the power fed by the power plant and the momentary power consumed by the consumers in the power distribution grid; the electrolyte in said electrolyzer (4), on its part, is preheated for conducting a more efficient electrolysis by a heat-exchanger (5) being a part of the cooling systems in nuclear or other power plants, and the oxygen produced (6) is released into the atmosphere, or is fed to a liquefaction and/or bottling plant (21), and said hydrogen produced (7) is fed to an incoming pipeline (8) along which, using pumps (9) and through a back valve (10), it is injected into a cylindrical tank (11) which bottom part accommodates a movable floating plunger with a sealing ring (12) which stroke is stopped by a limit ring (13), while said industrial hydrogen tank (11) is arranged in a deep underground pit (14) flooded with water (15), and a layer of lubrication oil floating in the water (16) is found below said plunger (12), whereby the back valve (10) is located under water (15), and the hydrogen stored in said cylindrical tank (11) is fed to a depot (17) for bottling, liquefaction and metal hydration and/or to an electric power plant cogenerating electricity (18) by means of an outgoing pipeline (19) on which a system of valves (20) is mounted, while at least one of the valves is located under water (15) in the vicinity of said cylindrical tank (11).

**2.** A device for optimization of the power plant operation by means of an industrial hydrogen production unit, **characterized in that** the momentary electrical power of the power plant (1) is fed to a DC converter (2) having parameters which are optimal for water electrolysis; the output current of the said converter passes through an electronic automatic control and switching unit (3) which controls the electric load of a system of electrolyzers (4), while at least one of said electrolyzers is of a specialized multi-electrode type, and the said control unit (3) comprises single electrodes to which the electrical power is fed in small steps, while the total power of the system of electrolyzers (4), with accuracy up to the consumption of a single electrode within the specialized electrolyzer, at each moment, is kept equal to the differences measured between the power fed by the power plant (1) and the momentary power consumed by the electric consumers in the grid.

**3.** A hydrogen storage system, a part of an industrial hydrogen production unit which is **characterized** with a cylindrical tank (11) completely submerged under water (15), while the tank lower part (11) accommodates a moving floating plunger having a sealing ring (12), the stroke of the said plunger is stopped by a limit ring (13), and below the said plunger (12) there is a lubricating oil (16) which floats above the water (15), while an inlet pipeline (8) is attached to the said tank (11) along which pipeline, through pumps (9) and a back valve (10) mounted nearby the tank (11), the gaseous hydrogen produced (7) is injected, also there attached is an outlet pipeline (19) on which a system of valves (20) is mounted, while at least one of said valves is located under water (15) in the vicinity of the cylindrical tank (11), while the top of the said tank (11) is submerged to a depth which is equal to at least three hundred times the diameter of the inlet and outlet pipelines (8) and (19).

**4.** A floating platform for an industrial hydrogen production unit based in an ocean or a sea, **characterized in that** the said platform (22) is constructed of plastic floats filled with air which floats are made of recycled plastic or metal and are tightly encompassed by meshes, while each one of them comprises an external thin layer of a special protective polymer designed for protection against the sea water impact, and along the perimeter of said platform (22), there is a solid metal frame which upper edge is raised so as to maintain the island integrity and to protect it against stormy sea.

**5.** An industrial unit for production of hydrogen according to claim 1, **characterized in that** the said electric power plant supplying power (1) is nuclear, thermal-nuclear or similar, with a continuous process of electricity production, as well as any other power plant using renewable energy sources.

**6.** An industrial unit for production of hydrogen according to claim 1 which is arranged on a floating platform according to claim 4, **characterized in that** the said electric power plant (1) is solar, while the said platform (22) is self-dependent and freely floating, and the said tank (11) is freely suspended below the platform (22), and the hydrogen (7) stored in it is intended for loading on tankers (23) transporting compressed gas.

**7.** An industrial unit for hydrogen production according to claim 1 which is arranged on a floating platform according to claim 4, **characterized in that** the said power plant (1) is a system of submerged turbines anchored in the area of an ocean current, while the platform (22) and the tank (11) suspended below the said platform (22) are also tightly anchored, and the hydrogen stored (7) is intended for loading on tankers (23) transporting compressed gas.
